(19) **Europäisches Patentamt European Patent Office Office européen des brevets**

(11) **EP 4 576 272 A1**

(12) **EUROPEAN PATENT APPLICATION**
published in accordance with Art. 153(4) EPC

(43) Date of publication:
**25.06.2025 Bulletin 2025/26**

(21) Application number: **24863855.3**

(22) Date of filing: **06.08.2024**

(51) International Patent Classification (IPC):
*H01M 4/62* (2006.01)     *H01M 4/13* (2010.01)
*H01M 10/0562* (2010.01)     *H01M 10/052* (2010.01)
*H01M 4/02* (2006.01)

(52) Cooperative Patent Classification (CPC):
**H01M 4/02; H01M 4/13; H01M 4/62; H01M 10/052; H01M 10/0562;** Y02E 60/10

(86) International application number:
**PCT/KR2024/011570**

(87) International publication number:
**WO 2025/058246 (20.03.2025 Gazette 2025/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.09.2023 KR 20230121061**

(71) Applicant: **LG Energy Solution, Ltd.**
**Seoul 07335 (KR)**

(72) Inventors:
• **LEE, Choonghyeon**
  **Daejeon 34122 (KR)**
• **KWON, Hyejin**
  **Daejeon 34122 (KR)**
• **KIM, Taegon**
  **Daejeon 34122 (KR)**
• **SONG, Min Sang**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **CATHODE FOR ALL-SOLID-STATE BATTERY AND ALL-SOLID-STATE BATTERY COMPRISING SAME**

(57)     Disclosed is a positive electrode for all-solid-state battery and an all-solid-state battery comprising same. More specifically, the positive electrode active material layer comprised in the positive electrode of the present invention comprises a positive electrode active material, a sulfide-based solid electrolyte, and a conductive material, wherein the particle diameter of the conductive material is between the particle diameter of the positive electrode active material and the particle diameter of the sulfide-based solid electrolyte, thereby increasing the contact interface between the positive electrode active material and the sulfide-based solid electrolyte while decreasing the porosity of the positive electrode as a whole, so that the conductivity of the positive electrode is maintained and the effect of increasing the energy density of the cell without a decrease in cell performance is achieved.

EP 4 576 272 A1

**Description**

[Technical Field]

This application claims the benefit of priority to Korean Patent Application No. 10-2023-0121061, filed September 12, 2023.

The present disclosure relates to a positive electrode for all-solid-state battery and an all-solid-state battery comprising same.

[Related Art]

A variety of batteries are being researched to overcome the limitations of current lithium secondary batteries in terms of capacity, safety, output, enlargement, and microminiaturization.

Representative examples include metal-air batteries, which have a very high theoretical capacity compared to lithium secondary batteries; all-solid-state batteries, which have no risk of explosion and are safe; supercapacitors in terms of output; NaS batteries or redox flow batteries (RFB) for large-scale applications; and thin film batteries for microminiaturization. Continuous research is being conducted in academia and industry on these technologies.

An all-solid-state battery is a battery in which the liquid electrolyte used in a conventional lithium secondary battery is replaced with a solid electrolyte, and since no flammable solvent is used in the battery, there is no possibility of ignition or explosion due to the decomposition reaction of the conventional electrolyte, which greatly improves safety. In addition, among all-solid-state batteries, technology development is continuing for sulfide-based all-solid-state batteries, which have a high ionic conductivity of solid electrolyte and can realize a high energy density of at least 900 Wh/L in theory. A sulfide-based all-solid-state battery refers to an all-solid-state battery containing a sulfide-based solid electrolyte.

In an all-solid-state battery system, lithium ions are not conducted by the liquid electrolyte contained in a conventional lithium-ion battery (LIB). Therefore, when manufacturing a positive electrode for sulfide-based all-solid-state batteries, it is necessary to increase the contact interface between the positive electrode active material and the sulfide-based solid electrolyte particles by adding small-diameter sulfide-based solid electrolyte particles inside the positive electrode to increase the conductivity of lithium ions. In addition, to improve energy density, the physical contact between the positive electrode active material, sulfide-based solid electrolyte particles, and other cell elements in the positive electrode must be enhanced, and the porosity of the positive electrode must be reduced after rolling, which must be maintained during charge and discharge.

Therefore, there is a continuous need to develop technologies that can further reduce the porosity at the positive electrode of sulfide-based all-solid-state batteries to improve the performance of all-solid-state batteries.

[Prior Art Reference]

[Patent Reference]

(Patent Reference 1) Japanese Laid-open Patent Publication No. 2021-144906

[Detailed Description of the Invention]

[Technical Problem]

The inventors of the present disclosure have conducted a multifaceted study to solve the above problem, and have discovered that, in manufacturing a positive electrode active material layer of the positive electrode for an all-solid-state battery, wherein a positive electrode active material, a sulfide-based solid electrolyte, and a conductive material are used, while using the conductive material having a particle diameter between that of the positive electrode active material and that of the sulfide-based solid electrolyte to fill the voids between the particles of the positive electrode active material and the sulfide-based solid electrolyte, if the specific surface area of the conductive material is limited below a certain level, the porosity of the positive electrode active material is reduced and the energy density of the all-solid-state battery is improved.

Accordingly, it is an object of the present disclosure to provide a positive electrode for an all-solid-state battery with reduced porosity.

Another object of the present disclosure is to provide an all-solid-state battery comprising a positive electrode for an all-solid-state battery with reduced porosity.

[Technical Solution]

To achieve the above objectives, the present disclosure provides a positive electrode for an all-solid-state battery comprising a positive electrode active material, a sulfide-based solid electrolyte, and a conductive material, wherein the particle diameter (D50) of the conductive material is between the particle diameter (D50) of the positive electrode active material and the particle diameter (D50) of the sulfide-based solid electrolyte, and the BET specific surface area of the conductive material is 50 $m^2/g$ or less.

The present disclosure also provides a positive electrode for an all-solid-state battery, wherein the conductive material has a particle diameter (D50) of 1.5 $\mu m$ to 3.8 $\mu m$.

The present disclosure also provides a positive electrode for an all-solid-state battery, wherein the conductive material has a bulk density of at least 0.05 g/cc.

The present disclosure also provides a positive electrode for an all-solid-state battery, wherein the conductive material has a true density of at least 1.5 g/cc.

The present disclosure also provides a positive electrode for an all-solid-state battery, wherein the conductive material has a crystal size (Lc(200)) of 30 nm to 80 nm.

The present disclosure also provides a positive electrode for an all-solid-state battery, wherein the positive electrode active material has the particle diameter (D50) of 4.0 $\mu m$ to 8.0 $\mu m$.

The present disclosure also provides a positive electrode for an all-solid-state battery, wherein the sulfide-based solid electrolyte has the particle diameter (D50) of 0.1 $\mu m$ to 1.5 $\mu m$.

The present disclosure also provides a positive electrode for an all-solid-state battery, wherein the positive electrode is in the form of a pellet comprising a positive electrode active material, a sulfide-based solid electrolyte, and a conductive material.

The present disclosure further provides a positive electrode for an all-solid-state battery, wherein the positive electrode comprises a positive electrode current collector; and a positive electrode active material layer formed on one side of the positive electrode current collector,

wherein the positive electrode active material layer comprises a positive electrode active material, a sulfide-based solid electrolyte, a conductive material, and a binder.

The present disclosure further provides a positive electrode for an all-solid-state battery, wherein the binder comprises at least one selected from the group consisting of polytetrafluoroethylene (PTFE), polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polypichlorohydrin, polyphosphazene, polyacrylonitrile, polystyrene, latex, acrylic resin, phenolic resin, epoxy resin, carboxymethylcellulose, hydroxypropyl cellulose, cellulose acetate, cellulose acetate butyrate, cellulose acetate propionate, cyanoethylcellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride)-hexafluoropropene.

The present disclosure also provides a positive electrode for an all-solid-state battery, wherein the conductive material may comprise graphite, and wherein the graphite is at least one selected from the group consisting of natural graphite and artificial graphite.

The present disclosure also provides a positive electrode for an all-solid-state battery, wherein the porosity of the positive electrode active material layer is 5 vol% to 16 vol%.

The present disclosure further provides a positive electrode for an all-solid-state battery, wherein the positive electrode active material is included in an amount of 55 to 90% by weight based on the total weight of the positive electrode active material layer,

wherein the sulfide-based solid electrolyte is included in an amount of 10 to 50% by weight based on the total weight of the positive electrode active material layer,
wherein the conductive material is included in an amount of 0.05 to 10% by weight based on the total weight of the positive electrode active material layer.

The present disclosure also provides an all-solid-state battery comprising the positive electrode, the negative electrode, and the solid electrolyte film interposed therebetween.

[Advantageous Effects]

According to the positive electrode for an all-solid-state battery of the present disclosure, the conductive material can improve the energy density of the all-solid-state battery by filling the voids between the particles of the positive electrode active material and the sulfide-based solid electrolyte, thereby reducing the porosity of the positive electrode.

Furthermore, the conductive material may have the effect of increasing the electrical conductivity of the positive electrode as a whole by filling the voids in the positive electrode.

[Best Mode]

Hereinafter, the present invention will be described in more detail to provide a better understanding.

The terms and words used in this specification and claims are not to be construed in their ordinary or dictionary sense, but rather in a sense and concept consistent with the technical idea of the present invention, based on the principle that the inventor may define the concept of a term as he/her sees fit to best describe his/her invention.

In this specification, to classify positive electrodes manufactured with and without a binder in the positive electrode active material layer, "composite positive electrode" may be referred to without a binder and "positive electrode" may be referred to with a binder.

**Positive Electrode for All-solid-state Battery**

The present disclosure relates to a positive electrode for an all-solid-state battery.

The positive electrode for an all-solid-state battery according to the present invention comprises a positive electrode active material, a sulfide-based solid electrolyte, and a conductive material.

In one example of the present disclosure, the positive electrode may be in the form of a pellet. The pelletized positive electrode may be used in a current collector free form, or the pellets may be placed on top of a current collector to form a positive electrode. The pellets may be formed by pressing a composite powder comprising a positive electrode active material, a sulfide-based solid electrolyte, and a conductive material. The pellets may comprise no binder, thereby excluding any resistance that may be caused by the binder.

In another example of the present disclosure, the positive electrode may comprise a positive electrode current collector and a positive electrode active material layer formed on one side of the positive electrode current collector. The positive electrode active material layer may comprise the positive electrode active material, a sulfide-based solid electrolyte, a conductive material, and a binder.

The particle diameter (D50) of the conductive material is between the particle diameter (D50) of the positive electrode active material and the particle diameter (D50) of the sulfide-based solid electrolyte, and the conductive material may have a BET specific surface area of 50 $m^2$/g or less. The conductive material may have a crystalline form having a lattice structure. As used herein, a positive electrode that does not include a binder may correspond to a composite positive electrode.

In a positive electrode for an all-solid-state battery according to the present disclosure, voids are formed due to a difference in the particle diameter between particles of the positive electrode active material and particles of a sulfide-based solid electrolyte, and the voids are filled with the conductive material, so that the porosity of the positive electrode is reduced and the energy density can be improved. Since the particle diameter (D50) of the conductive material is larger than the particle diameter (D50) of the sulfide-based solid electrolyte and smaller than the particle diameter (D50) of the positive electrode active material, the voids may be filled with the conductive material.

In one example of the present disclosure, the BET specific surface area of the conductive material may be 50 $m^2$/g or less. Specifically, the conductive material may have a BET specific surface area of 50 $m^2$/g or less, 45 $m^2$/g or less, 40 $m^2$/g or less, 35 $m^2$/g or less, 30 $m^2$/g or less, 25 $m^2$/g or less, or 20 $m^2$/g or less. If the BET specific surface area is greater than 50 $m^2$/g, the contact interface between the high specific surface area conductive material and the sulfide-based all-solid-state electrolyte may be increased, which may increase the electrolyte degradation reaction and decrease the ionic conductivity of the positive electrode itself. Further, the lower limit of the BET specific surface area is not particularly limited, but may be 5 $m^2$/g or more.

Furthermore, the particle diameter (D50) of the conductive material may be 1.5 $\mu$m to 3.8 $\mu$m. Specifically, the particle diameter (D50) of the conductive material may be 1.5 $\mu$m or more, 1.7 $\mu$m or more, 2.0 $\mu$m or more, or 2.2 $\mu$m or more, and may be 2.6 $\mu$m or less, 2.8 $\mu$m or less, 3.0 $\mu$m or less, 3.2 $\mu$m or less, 3.4 $\mu$m or less, 3.6 $\mu$m or less, or 3.8 $\mu$m or less. If the particle diameter (D50) of the conductive material is less than 1.5 $\mu$m, the particles are too small to fill the voids formed by the difference in particle diameter between the particles of the positive electrode active material and the sulfide-based solid electrolyte, and the conductive material may be adsorbed only on the surface of the positive electrode active material, and if it is greater than 3.8 $\mu$m, it is difficult to fill the voids formed by the difference in particle diameter between the particles of the positive electrode active material and the sulfide-based solid electrolyte, and the effect of reducing the porosity of the positive electrode may be insignificant.

The particle diameter (D50) can be measured by introducing the conductive material into a particle size analyzer (Mastersizer 3000, Malvern).

Furthermore, the bulk density of the conductive material may be greater than or equal to 0.05 g/cc.

Specifically, the bulk density may be greater than or equal to 0.05 g/cc, greater than or equal to 0.06 g/cc, or greater than or equal to 0.07 g/cc. If the bulk density is less than 0.05 g/cc, the conductive material itself may have a lower density, thereby reducing the overall density of the positive electrode. The upper limit of the bulk density is not particularly limited, but may be 0.1 g/cc or less, 0.3 g/cc or less, or 0.5 g/cc or less.

The bulk density may be measured using a density meter conforming to ASTM D 1895.

Further, the true density of the conductive material may be greater than or equal to 1.5 g/cc.

Specifically, the true density may be 1.5 g/cc or more, 1.7 g/cc or more, 2.0 g/cc or more, or 2.2 g/cc or more. If the true density is less than 1.5 g/cc, the density of the conductive material itself is low, which can reduce the overall density of the positive electrode. The upper limit of the true density is not specifically limited, but may be 3.0 g/cc or less, 4.0 g/cc or less, or 5.0 g/cc or less.

The true density can be measured using a density meter according to ASTM D 1895.

Further, the conductive material may have a crystal size in the c-axis direction (Lc(002)) of 30 nm to 80 nm as measured by XRD.

Specifically, the crystal size may be 30 nm or larger, 35 nm or larger, or 40 nm or larger, and may be 65 nm or smaller, 70 nm or smaller, 75 nm or smaller, or 80 nm or smaller.

The crystal size in the c-axis direction represents Lc(002), which is the crystal size in the c-axis direction at the time of XRD measurement, and can be calculated by Scherrer's formula in Formula 1 below.

<Formula 1>

$$L_c = \frac{K\lambda}{\beta_{(2\theta)}\cos\beta}$$

K = Scherrer's constant (K=0.9)
$\beta$= Half-width
$\lambda$= Wavelength (0.154056 nm)
$\theta$= Angle at maximum peak

Further, the conductive material may comprise graphite, wherein the graphite may comprise at least one selected from the group consisting of natural graphite and artificial graphite, but is not limited thereto, provided that the conductive material has the specific surface area, particle size, and crystal structure as described above. Preferably, the conductive material may be artificial graphite.

The natural graphite may be graphite that exists in nature and is mined, refined, and then produced as a conductive material.

Since the artificial graphite is made by applying high heat of at least 2,500°C to create a crystal structure, it can have a more stable crystal structure than natural graphite, and it is advantageous for charging and discharging because there are many paths for lithium ions to move.

Further, the conductive material may be included in an amount of 0.05 to 10% by weight based on the total weight of the positive electrode active material layer. Specifically, the content of the conductive material may be 0.05% by weight or more, 0.1% by weight or more, 0.5% by weight or more, 1% by weight or more, 2% by weight or more, or 3% by weight or more, or may be 5% by weight or less, 7% by weight or less, or 10% by weight or less. If the content of the conductive material is less than 0.05% by weight, the electrical conductivity of the positive electrode may be degraded, and if it is more than 10% by weight, the content of the positive electrode active material and the sulfide-based solid electrolyte may be relatively reduced, resulting in a degradation of the battery performance.

In one example of the present disclosure, the particle diameter (D50) of the positive electrode active material may be 4.0 $\mu$m to 8.0 $\mu$m.

Specifically, the particle diameter (D50) of the positive electrode active material may be 4.0 $\mu$m or more, 4.5 $\mu$m or more, or 5.0 $\mu$m or more, and may be 6.0 $\mu$m or less, 6.5 $\mu$m or less, 7.0 $\mu$m or less, 7.5 $\mu$m or less, or 8.0 $\mu$m or less. If the particle diameter (D50) of the positive electrode active material is less than 4.0 $\mu$m, even if the positive electrode active material and the sulfide-based solid electrolyte are dispersed in the same weight ratio, the dispersibility may be reduced due to the small particle diameter of the positive electrode active material, and if it is greater than 8.0 $\mu$m, excessively large voids may be formed in the positive electrode active material layer, and the performance of an all-solid-state battery may be reduced.

The particle diameter (D50) can be measured by introducing the positive electrode active material into a particle size analyzer (Mastersizer 3000, Malvern).

Furthermore, the positive electrode active material may be any material capable of reversibly adsorbing and releasing lithium ions, without being particularly limited thereto, for example, a layered compound such as lithium cobalt

oxide (LiCoO$_2$), lithium nickel oxide (LiNiO$_2$), Li[Ni$_x$Co$_y$Mn$_z$M$_v$]O$_2$ (wherein M is any one or two or more elements selected from the group consisting of Al, Ga and In; and 0.3≤x<1.0, 0≤y, z≤0.5, 0≤v≤0.1, and x+y+z+v=1), Li(Li$_a$M$_{b·\ a-b}$M'$_{b'}$)O$_{2-c}$A$_c$ (wherein 0≤a≤0.2, 0.6≤b≤1, 0≤b'≤0.2, and 0≤c≤0.2; M comprises at least one selected from the group consisting of Mn, Ni, Co, Fe, Cr, V, Cu, Zn, and Ti; M' comprises at least one selected from the group consisting of Al, Mg and B; and A comprises at least one selected from the group consisting of P, F, S and N), or a compound substituted with one or more transition metals; a lithium manganese oxide such as a compound of formula Li$_{1+y}$Mn$_{2-y}$O$_4$ (wherein y is 0 to 0.33), LiMnO$_3$, LiMn$_2$O$_3$, or LiMnO$_2$; a lithium copper oxide (Li$_2$CuO$_2$); a vanadium oxide, such as LiV$_3$O$_3$, LiFe$_3$O$_4$, V$_2$O$_5$, or Cu$_2$V$_2$O$_7$; a Ni site-type lithium nickel oxide represented by formula LiNi$_{1-y}$MyO$_2$ (wherein M is Co, Mn, Al, Cu, Fe, Mg, B or Ga, and y is 0.01 to 0.3; a lithium manganese complex oxide represented by formula LiMn2-yMyO2 (wherein M is Co, Ni, Fe, Cr, Zn, or Ta, and y is 0.01 to 0.1) or Li$_2$Mn$_3$MO$_8$ (wherein M is Fe, Co, Ni, Cu, or Zn); LiMn$_2$O$_4$, in which a portion of the Li in the formula is substituted by an alkaline earth metal ion; a disulfide compound; Fe$_2$(MoO$_4$)$_3$; and the like, but not limited thereto.

Further, the positive electrode active material may be included in an amount of 55 to 90% by weight based on the total weight of the positive electrode active material layer. Specifically, the content of the positive electrode active material may be 55% by weight, 60% by weight or more, or 65% by weight or more, 83% by weight or less, 85% by weight or less, or 90% by weight or less. If the content of the positive electrode active material is less than 55% by weight, the battery performance may be reduced, and if the content is greater than 90% by weight, the mass transfer resistance may be increased.

In one example of the present disclosure, the particle diameter (D50) of the sulfide-based solid electrolyte may be 0.1 μm to 1.5 μm.

Specifically, the particle diameter (D50) of the sulfide-based solid electrolyte may be 0.1 μm or more, 0.3 μm or more, or 0.5 μm or more, and may be 0.9 μm or less, 1.0 μm or less, 1.2 μm or less, or 1.5 μm or less. If the particle diameter (D50) of the sulfide-based solid electrolyte is less than 0.1 μm, the ultra-fine solid electrolyte may not be sufficiently dispersed in the positive electrode layer and may agglomerate, and if it is greater than 1.5 μm, the dispersion may be somewhat easier, but the contact surface with the positive electrode active material particles may be reduced and the positive electrode porosity may increase.

Further, the sulfide-based solid electrolyte may comprise at least one selected from the group consisting of LiPSX (wherein X is Cl, Br, or I), LiGePS, and LiPS. However, the sulfide-based solid electrolyte is not limited to these, and a wide range of sulfide-based solid electrolytes conventionally used in the art may be used.

Further, the sulfide-based solid electrolyte may be included in an amount of 10 to 50% by weight based on the total weight of the positive electrode active material layer. Specifically, the content of the sulfide-based solid electrolyte may be 10% by weight or more, 20% by weight or more, or 30% by weight or more, and may be 40% by weight or less, 45% by weight or less, or 50% by weight or less. If the content of the positive electrode active material is less than 10% by weight, it may not be sufficient to fill the voids formed in the positive electrode active material layer, making it difficult to reduce the porosity of the positive electrode active material, and if it is greater than 50% by weight, the content of the positive electrode active material and the conductive material may be relatively reduced, resulting in a decrease in the battery performance.

In one example of the present disclosure, the positive electrode active material layer may further comprise a binder. The binder may be included to facilitate bonding between the materials contained in the positive electrode active material layer and bonding between the positive electrode active material layer and the positive electrode current collector. The binder may further reduce the positive electrode porosity by promoting bonding between the materials included in the positive electrode active material layer.

The binder may be a fibrous binder. The binder may be incorporated in a fibrous form in the positive electrode active material layer due to fibrosis during mixing in the manufacture of a positive electrode. Thus, it is preferred that the binder is easily deformable in its physical properties.

The binder may comprise at least one selected from the group consisting of polytetrafluoroethylene (PTFE), polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polypichlorohydrin, polyphosphazene, polyacrylonitrile, polystyrene, latex, acrylic resin, phenolic resin, epoxy resin, carboxymethylcellulose, hydroxypropyl cellulose, cellulose acetate, cellulose acetate butyrate, cellulose acetate propionate, cyanoethylcellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride)-hexafluoropropene. Preferably, the binder may comprise polytetrafluoroethylene (PTFE).

Further, the binder may be included in an amount of 0.1 to 3% by weight based on the total weight of the positive electrode active material layer. Specifically, the content of the binder may be 0.1% by weight or more, 0.5% by weight or more, 0.8% by weight or more, or may be 1.5% by weight or less, 2% by weight or less, or 3% by weight or less. If the content of the binder is less than 0.1% by weight, the effect of improving the cohesion between the materials contained in the positive electrode active material layer is minimal and the electrode sheet may not be formed properly, and if the content is greater than 3% by weight, the ionic conductivity or electrical conductivity may be reduced.

In one example of the present disclosure, the porosity of the positive electrode active material layer may be 5 vol% to 16 vol%.

Specifically, the porosity may be 5 vol% or greater, 8 vol% or greater, 10 vol% or greater, or 13 vol% or greater, 13.8 vol% or less, 14 vol% or less, 14.5 vol% or less, 15 vol% or less, 15.5 vol% or less, or 16 vol% or less. The porosity is within the range optimized by considering performance such as the energy density of the battery, such that a porosity greater than 16 vol% may degrade the energy density of the battery.

In one example of the present disclosure, the positive electrode current collector supports the positive electrode active material layer and serves to transfer electrons between the outer wire and the positive electrode active material layer.

The positive electrode current collector is not particularly limited as long as it has a high electronic conductivity without causing chemical changes in an all-solid-state battery. For example, stainless steel, aluminum, nickel, titanium, palladium, calcined carbon, stainless steel whose surface is treated with carbon, nickel, or silver, aluminum-cadmium alloy, and the like may be used as the positive electrode current collector.

The positive electrode current collector may have a microscopic uneven structure or adopt a three-dimensional porous structure on the surface of the positive electrode current collector to strengthen the binding force with the positive electrode active material layer. Accordingly, the positive electrode current collector may comprise various forms such as film, sheet, foil, mesh, net, porous material, foam, nonwoven material, and the like.

## Method for Producing a Positive Electrode for an All-solid-state Battery

The present disclosure relates to a method of producing a positive electrode for an all-solid-state battery. The specific substances, properties, and contents of the positive electrode active material, sulfide-based solid electrolyte, conductive material, and binder used in the manufacturing method of the positive electrode for an all-solid-state battery according to the present invention are as described above.

In the present disclosure, a positive electrode can be classified to a "composite positive electrode" without a binder or a "positive electrode" with a binder.

In one example of the present disclosure, a method for preparing a composite positive electrode without a binder may comprise (A1) mixing a positive electrode active material, a sulfide-based solid electrolyte, and a conductive material; and (A2) preparing the mixed powder obtained in step (A1) in the form of a pellet. The pelletized form in step (A2) may be formed by pressing with a jig.

The composite positive electrode prepared as described above can be applied to a pressure jig cell. Since the composite positive electrode does not include a binder, the factor that the binder acts as a resistance can be eliminated. Therefore, the composite positive electrode can be used to perform a performance evaluation using a pressure jig cell in which the resistance factor is eliminated.

Further, in one example of the present disclosure, a method of manufacturing a positive electrode comprising a binder comprises (B1) mixing a positive electrode active material, a sulfide-based solid electrolyte, a conductive material, and a binder; (B2) applying the mixed powder obtained in step (B1) to a calendaring process to form a film; and (B3) attaching the film-like layer of positive electrode active material obtained in step (B2) to a positive electrode current collector.

The mixing in step (B1) may be physical mixing, wherein the binder may be fibersized by the physical mixing. During the physical mixing, the binder may be physically deformed by friction with the particles in the mixed powder by shear force, causing fibrosis. For example, PTFE, which has physical properties that can be easily deformed, can be used as a binder. Furthermore, physical deformation can be accomplished by introducing induction, ball milling, or roll pressing during mixing.

Further, in step (B2), the mixed powder obtained in step (B1) may be subjected to a calendaring process to mold it into a film.

The conditions of the calendering process may be the application of suitably controlled process conditions to form a film. For example, the calendering process may be performed at a temperature of 50°C to 200°C and for 5 to 50 loops. However, the calendering process conditions, such as temperature pressure, or number of loops, may be any of those used in electrode manufacturing processes used in the conventional battery field.

Further, in step (B3), the positive electrode active material layer in the form of a film obtained in step (B2) is attached to the positive electrode current collector to prepare a positive electrode for an all-solid-state battery.

## All-solid-state Battery

The present disclosure also relates to an all-solid-state battery comprising the sulfide-based solid electrolyte layer.

An all-solid-state battery according to the present disclosure includes the positive electrode, the negative electrode, and a sulfide-based solid electrolyte layer interposed therebetween. The positive electrode is as described above.

In one example of the present disclosure, the negative electrode comprises a negative electrode active material layer, wherein the negative electrode active material layer may be formed on one side of the negative electrode current collector.

The negative electrode active material layer may comprise a negative electrode active material, a conductive material, and a binder. Alternatively, the negative electrode active material layer may be an anodeless layer.

In the negative electrode active material layer, the negative electrode active material may comprise a material capable of reversibly intercalating or deintercalating lithium ($Li^+$), a material capable of reacting with lithium ions to reversibly form a lithium-containing compound, a lithium metal, or a lithium alloy.

The material into which the lithium ions ($Li^+$) can be reversibly inserted or removed can be, for example, crystalline carbon, amorphous carbon, or a mixture thereof. The material capable of reacting with the lithium ions ($Li^+$) to reversibly form a lithium-containing compound may be, for example, tin oxide, titanium nitrate, or silicon. The lithium alloy may be, for example, an alloy of lithium (Li) and a metal selected from the group consisting of indium (In), sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative electrode active material may be a lithium metal or a lithium-indium alloy (Li-In), more specifically, it may be in the form of a lithium metal or a lithium thin film or a lithium-indium alloy thin film or powder.

The negative electrode active material may be comprised in an amount of 40 to 80% by weight based on the total weight of the negative electrode active material layer. Specifically, the content of the negative electrode active material may be 40% by weight or more, 50% by weight or more, or may be 70% by weight or less, or 80% by weight or less. If the content of the negative electrode active material is less than 40% by weight, the connectivity between the wet negative electrode active layer and the dry negative electrode active layer may be insufficient, and if the content is greater than 80% by weight, the mass transfer resistance may be greater.

The binder is a component that assists in the bonding of the negative electrode active material and the conductive material or the bonding to a negative electrode current collector, and may comprise at least one selected from the group consisting of styrene-butadiene rubber, acrylated styrene-butadiene rubber, acrylonitrile copolymer, acrylonitrile-butadiene rubber, nitrile butadiene rubber, acrylonitrile-styrene-butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polypichlorohydrin, polyphosphazene, polyacrylonitrile, polystyrene, latex, acrylic resin, phenolic resin, epoxy resin, carboxymethylcellulose, hydroxypropyl cellulose, cellulose acetate, cellulose acetate butyrate, cellulose acetate propionate, cyanoethylcellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride)-hexafluoropropene. Preferably, the binder may comprise polytetrafluoroethylene (PTFE).

Further, the binder may be comprised in an amount of 0.5% by weight to 4% by weight based on the total weight of the negative electrode active material layer, and more specifically, the content of the binder may be 0.5% by weight or more, 1% by weight or more, 1.5% by weight or more, 3% by weight or less, 3.5% by weight or less, or 4% by weight or less. If the binder content is less than 0.5% by weight, the adhesion of the positive electrode active material to the negative electrode current collector may be reduced, and if the binder content is greater than 4% by weight, the adhesion may be improved, but the content of the negative electrode active material may be reduced, resulting in a lower cell capacity.

Furthermore, the conductive material is not particularly limited as long as it prevents side reactions in the internal environment of an all-solid-state battery and has excellent electrical conductivity without causing chemical changes in the battery, and graphite or conductive carbon can be used as a representative, for example, graphite such as natural graphite, artificial graphite, and the like; carbon black such as carbon black, acetylene black, ketjen black, denka black, thermal black, channel black, furnace black, lamp black, summer black, and the like; carbon-based materials having a crystal structure of graphene or graphite; conductive fibers such as carbon fibers, metal fibers, etc.; carbon fluorides; metal powders, such as aluminum powder, nickel powder, etc.; conductive whiskeys, such as zinc oxide, potassium titanate, etc.; conductive oxides, such as titanium oxide; and conductive polymers, such as polyphenylene derivatives; can be used alone or in a mixture of two or more of the foregoing, but are not necessarily limited thereto. Preferably, the conductive material may comprise vapor-grown carbon fiber (VGCF).

Further, the conductive material may be comprised in an amount of 1% by weight to 5% by weight based on the total weight of the negative electrode active material layer, and more specifically, the content of the conductive material may be 1% by weight or more, 1.5% by weight or more, 2% by weight or more, and may be 4% by weight or less, 4.5% by weight or less, or 5% by weight or less. If the content of the conductive material is too small, such as less than 1% by weight, it is difficult to expect the effect of improving the electrical conductivity or the electrochemical properties of the battery may be degraded, and if it is too large, such as more than 5% by weight, the amount of negative electrode active material may be relatively small, resulting in a decrease in capacity and energy density. The method of incorporating the conductive material into the negative electrode is not substantially limited, and any conventional method known in the art can be used, such as mixing with or coating the negative electrode active material.

Furthermore, the negative electrode current collector is not particularly limited as long as it is conductive without causing chemical changes in the battery, for example, copper, stainless steel, aluminum, nickel, titanium, calcined carbon, copper or stainless steel whose surface is treated with carbon, nickel, or silver, aluminum-cadmium alloy, and the like can be used. Also, like the positive electrode current collector, the negative electrode current collector can be in various forms, such as a film, sheet, foil, net, porous material, foam, nonwoven material, etc. with fine irregularities formed on the surface.

The method of manufacturing a negative electrode is not particularly limited, and can be manufactured by forming a negative electrode active material layer on the negative electrode current collector using a conventional method of forming a layer or a film. For example, methods such as pressing, coating, or deposition can be utilized. The negative electrode of the present invention also includes a case in which a metallic lithium thin film is formed on a metal plate by initial charging after the battery is assembled without a lithium thin film on the negative electrode current collector.

Furthermore, the anodeless layer refers to a negative electrode layer in which no lithium metal or lithium alloy that can be a source of lithium among the negative electrode active materials is present in the negative electrode at the time of initial assembly of the battery, but lithium is precipitated in the negative electrode by charging. A battery comprising the anodeless layer may be referred to as a negative electrode-free battery.

In the negative electrode-free battery, during the charging and discharging of the battery, lithium ions released from the positive electrode migrate to the negative electrode to form a negative electrode active material layer. For example, during charging of the battery, lithium ions are released from the positive electrode active material and migrate to the negative electrode side to form a lithium metal consisting purely of lithium, forming a lithium metal layer on the negative electrode current collector, or forming a lithium metal structure in any other form other than a layer form. Any other form may refer to, for example, a structure in which the lithium metal is agglomerated in the form of particles.

In one example of the present disclosure, the sulfide-based solid electrolyte comprised in the sulfide-based solid electrolyte layer may comprise at least one selected from the group consisting of LiPSX (wherein X is Cl, Br, or I), LiGePS, and LiPS. However, the sulfide-based solid electrolyte is not limited to these, and a wide range of sulfide-based solid electrolytes conventionally used in the art may be used.

**Battery Module**

The present disclosure also relates to a battery module comprising the all-solid-state battery as a unit cell, a battery pack comprising the battery module, and a device comprising the battery pack as a power source.

Specific examples of such devices include, but are not limited to, a power tool powered by an electric motor; an electric vehicle, including an electric vehicle (EV), a hybrid electric vehicle (HEV), a plug-in hybrid electric vehicle (PHEV), and the like; an electric two-wheeled vehicle, including an electric bicycle (E-bike) and an electric scooter (E-scooter); an electric golf cart; a power storage system; and the like.

[Mode for Practicing the Invention]

Hereinafter, preferred examples of the present invention are described for the purpose of illustrating the present invention, but it will be apparent to those skilled in the art that various changes and modifications are possible within the scope of the present invention and the technical idea, and that such changes and modifications fall within the scope of the appended patent claims.

In the following examples and comparative examples, a positive electrode and an all-solid-state battery comprising same were prepared according to the composition of the positive electrode active material layer and the properties of the raw material as described in Table 2 below, by using a conductive material having the properties as described in Table 1 below.

[Table 1]

| Conductive material | Graphite A (Imerys) | Graphite B (Imerys) | Carbon black |
|---|---|---|---|
| Specific surface area ($m^2/g$) | < 30 | < 30 | ~1300 |
| D50 ($\mu$m) | 2.4 | 3.5 | 0.5 |
| Bulk density (g/cc) | 0.07 | 0.06 | 0.03 |
| True density (g/cc) | 2.255 | 2.255 | 1.8 |

(continued)

| Conductive material | Graphite A (Imerys) | Graphite B (Imerys) | Carbon black |
|---|---|---|---|
| Lc(002) (nm) | 60 | 75 | 5 |

[Table 2]

| | Composition of positive electrode active material layer (% by weight) | | | | Properties of raw material | | | |
|---|---|---|---|---|---|---|---|---|
| | | | | | Conductive material | | Positive electrode active material | Sulfide-based solid electrolyte |
| | Positive electrode active material | Sulfide-based solid electrolyte | Conductive material | Binder | BET specific surface area (m$^2$/g) | Particle diameter (D50) ($\mu$m) | Particle diameter (D50) ($\mu$m) | Particle diameter (D50) ($\mu$m) |
| Example 1 | 60 | 35 | 5 (Graphite A) | - | < 30 | 2.4 | 5.3 | 0.8 |
| Example 2 | 78 | 19.5 | 1 (Graphite A) | 1.5 | < 30 | 2.4 | 5.3 | 0.8 |
| Example 3 | 60 | 35 | 5 (Graphite B) | - | < 30 | 3.5 | 5.3 | 0.8 |
| Example 4 | 78 | 19.5 | 1 (Graphite B) | 1.5 | < 30 | 3.5 | 5.3 | 0.8 |
| Comparative Example 1 | 60 | 35 | 5 (Carbon Black) | - | ~1300 | 0.5 | 5.3 | 0.8 |
| Comparative Example 2 | 78 | 19.5 | 1 (Carbon Black) | 1.5 | ~1300 | 0.5 | 5.3 | 0.8 |

**Example 1: Preparation of a composite positive electrode**

The positive electrode was prepared as follows using $LiN_{0.8}Co_{0.1}Mn_{0.1}O_2$(NCM 811) as a positive electrode active material, $Li_6PS_5Cl$ as a sulfide-based solid electrolyte, and Graphite A as a conductive material. The properties of Graphite A are shown in Table 1 above.

Powder mixing of the positive electrode active material, sulfide-based solid electrolyte, and conductive material was performed in a weight ratio of 60 : 35 : 5. Specifically, the positive electrode active material and the sulfide-based solid electrolyte were quantified in a powder state and mixed for 15 minutes using agate mortar in a dry room environment to obtain a mixture. Then, the conductive material was weighed and added to the above mixture and mixed for another 15 minutes to obtain a mixed powder.

Using a pressurized jig, the above mixed powder was pressurized and prepared into a pelletized composite positive electrode with a 3 mAh/cm$^2$ loading.

**Example 2: Preparation of a positive electrode**

The positive electrode was prepared as follows using $LiN_{0.8}Co_{0.1}Mn_{0.1}O_2$(NCM 811) as a positive electrode active material, $Li_6PS_5Cl$ as a sulfide-based solid electrolyte, Graphite A as a conductive material, and polytetrafluoroethylene (PTFE) as a binder. The properties of Graphite A are shown in Table 1 above.

Powder mixing of the positive electrode active material, sulfide-based solid electrolyte, conductive material, and binder was performed in a weight ratio of 78 : 19.5 : 1 : 1.5. Specifically, the positive electrode active material and the sulfide-based solid electrolyte were quantified in a powder state and mixed for 15 minutes using a blade mixer in a dry room environment to obtain a mixture. The conductive material was then quantified and added to the above mixture and the binder, polytetrafluoroethylene (PTFE) powder, was quantified and further mixed to obtain a mixed powder.

After the above mixed powder was introduced into the mortar, fibrosis was carried out in the mortar, and calendering was carried out in a roller to prepare a positive electrode with a loading of 6 mAh/cm$^2$.

### Example 3: Preparation of a composite positive electrode

The same procedure as Example 1 was performed except that Graphite B was used instead of Graphite A as the conductive material. The properties of Graphite B are listed in Table 1 above.

### Example 4: Preparation of a positive electrode

The same procedure as Example 2 was performed except that Graphite B was used instead of Graphite A as the conductive material. The properties of Graphite B are listed in Table 1 above.

### Comparative Example 1

The same procedure as Example 1 was performed except that carbon black was used instead of Graphite A as the conductive material. The properties of carbon black are listed in Table 1 above.

### Comparative Example 2

The same procedure as Example 2 was performed except that carbon black was used instead of Graphite A as the conductive material. The properties of carbon black are listed in Table 1 above.

### Experimental Example 1: Performance evaluation of all-solid-state batteries

The performance of all-solid-state batteries was evaluated according to the type of conductive material in the positive electrode active material layer. The composite positive electrodes prepared in Example 1, Example 3, and Comparative Example 1 were subject to evaluation.
In order to evaluate the performance of the all-solid-state batteries, a pressure jig cell was prepared by the following method.
After transferring the pelletized composite positive electrode to a pressure jig cell, a sulfide-based solid electrolyte powder (200 mg) was placed on the pellet and pressurized with a force of 400 Mpa for 60 seconds to form a film-like sulfide-based solid electrolyte layer. Then, a lithium metal negative electrode was placed on one side of the sulfide-based solid electrolyte layer, and pressurized again with a force of 100 Mpa to increase the contact between the sulfide-based solid electrolyte layer and the negative electrode. Afterward, the pressure jig cell was prepared by clamping at an appropriate pressure.
The capacity capability of the pressure jig cell was observed using the protocol of activating the cell in a charger/discharger to 0.05C for 2 cycles, and then discharging it up to 1C, and the results are shown in Table 3 and Table 4 below. Specifically, the capacity capability was observed using the protocol of 0.05C CC/CV (Constant Current/Constant Voltage) charging, 0.05C CC (Constant Current) discharging for 2 cycles, followed by 0.1C CC/CV charging, but CC discharging to 0.1C/0.2C/0.33C/0.5C/1C, in a charger/discharger.

[Table 3]

| Voltage range/Temperature | | 3.0 to 4.25 V/60°C | | |
|---|---|---|---|---|
| Separation | | Example 1 | Example 3 | Comparative Example 1 |
| Loading (mAh/cm$^2$) | | 3 | | |
| 1$^{st}$ Charge capacity (0.05C) | mAh/g | 220 | 208 | 264 |
| 1$^{st}$ Discharge capacity (0.05C) | | 204 | 195 | 210 |
| Efficiency | % | 93 | 94 | 79 |
| 2$^{nd}$ Charge capacity (0.05C) | mAh/g | 209 | 197 | 225 |
| 2$^{nd}$ Discharge capacity (0.05C) | | 201 | 194 | 204 |
| Efficiency | % | 96 | 98 | 91 |

Referring to Table 3 above, it can be seen that in Examples 1 and 3, the particle diameter ($D_{50}$) was between the particle diameter of the positive electrode active material and the particle diameter of the sulfide-based solid electrolyte, and Graphite A and Graphite B having a low specific surface area of less than 30 m$^2$/g were used, and they exhibited superior performance in terms of discharge capacity compared to Comparative Example 1, where carbon black having a high specific surface area of 1300 m$^2$/g or less was used as the conductive material. Furthermore, it was observed that Comparative Example 1 showed a decrease in efficiency due to the rapid increase in the initial charge capacity, and also showed lower efficiency during the second charge and discharge compared to Examples 1 and 3.

[Table 4]

| mAh (%) | | Example 1 | Example 3 | Comparative Example 1 |
|---|---|---|---|---|
| Rate (0.1C charge) | 0.1C | 197 | 190 | 188 |
| | 0.2C | 191 | 174 | 163 |
| | 0.33C | 183 | 159 | 137 |
| | 0.5C | 173 | 163 | 76 |
| | 1.0C | 154 | 150 | 28 |
| | | | | |

Referring to Table 4 above, it is observed that Examples 1 and 3 have better discharge capacity retention compared to Comparative Example 1. Specifically, Examples 1 and 3 maintained a discharge capacity of 150 mAh/g at 1C discharge, while Comparative Example 1 measured a discharge capacity of 28 mAh/g. This is due to the phenomenon that when the specific surface area of the carbon material in the composite positive electrode is high (Comparative Example 1), the decomposition reaction of the sulfide-based solid electrolyte in contact with the carbon material is accelerated with increasing c-rate.

Experimental Example 2: Confirmation of the internal structure of the positive electrode

Experiments were conducted to measure the internal structure of the positive electrode according to the type of conductive material within the positive electrode active material layer containing the binder. Example 2, Example 4, and Comparative Example 2 were evaluated. They all contain a binder in the positive electrode active material layer. Example 2, Example 4, and Comparative Example 2 all use a binder in the manufacture of the positive electrode, wherein Example 2 includes Graphite A as a conductive material, Example 4 includes Graphite B as a conductive material, and Comparative Example 2 includes carbon black as a conductive material. As shown in Table 1 above, carbon black has a significantly larger specific surface area compared to Graphite A and Graphite B.

The positive electrodes prepared according to Example 2, Example 4, and Comparative Example 2 were further pressurized using a warm isostatic press (WIP) to ensure that the positive electrode elements were in full contact, and the thickness and porosity were measured, the results of which are shown in Table 5 below. The porosity was measured using the positive electrode density calculated from 1) the thickness after WIP rolling of the positive electrode, 2) the weight of the positive electrode, 3) the area of the positive electrode, and 4) the true density of the positive electrode elements used, according to Formula 2 below.

Positive electrode porosity (%) = (1-([positive electrode weight]/[positive electrode area x positive electrode thickness]/[positive electrode density] x 100)     <Formula 2>

[Table 5]

| | | Example 2 | Example 4 | Comparative Example 2 |
|---|---|---|---|---|
| Loading (mAh/cm$^2$) | | 6 | 6 | 6 |
| Before Rolling | Positive electrode thickness ($\mu$m) | 155.8 | 156.3 | 168.4 |
| | Porosity (%) | 32.9 | 33.1 | 37.9 |
| After rolling | Positive electrode thickness ($\mu$m) | 121 | 122.5 | 126.3 |
| | Porosity (%) | 13.6 | 14.7 | 17.2 |

Referring to Table 5 above, it can be seen that the positive electrode thickness and porosity of Example 2 and Example 4 are smaller both before and after rolling compared to Comparative Example 2. From this, it can be seen that Graphite A and Graphite B, which have a smaller specific surface area compared to carbon black, effectively fill the voids in the positive electrode, reducing the positive electrode thickness and porosity.

Therefore, it can be predicted that if the particle diameter of the conductive material in Example 2 is between the particle diameter of the positive electrode active material and the particle diameter of the sulfide-based solid electrolyte, and has a low specific surface area, the porosity of the positive electrode active material layer will be reduced, and the performance of the positive electrode will be increased accordingly.

**Claims**

1. A positive electrode for an all-solid-state battery, comprising a positive electrode active material, a sulfide-based solid electrolyte, and a conductive material,

    wherein a particle diameter (D50) of the conductive material is between the particle diameter (D50) of the positive electrode active material and the particle diameter (D50) of the sulfide-based solid electrolyte,
    wherein a BET specific surface area of the conductive material is 50 $m^2$/g or less.

2. The positive electrode for an all-solid-state battery according to claim 1,
    wherein the conductive material has a particle diameter (D50) of 1.5 $\mu$m to 3.8 $\mu$m.

3. The positive electrode for an all-solid-state battery according to claim 1,
    wherein the conductive material has a bulk density of at least 0.05 g/cc.

4. The positive electrode for an all-solid-state battery according to claim 1,
    wherein the conductive material has a true density of at least 1.5 g/cc.

5. The positive electrode for an all-solid-state battery according to claim 1,
    wherein the conductive material has a crystal size (Lc(200)) of 30 nm to 80 nm.

6. The positive electrode for an all-solid-state battery according to claim 1,
    wherein the positive electrode active material has a particle diameter (D50) of 4.0 $\mu$m to 8.0 $\mu$m.

7. The positive electrode for an all-solid-state battery according to claim 1,
    wherein the sulfide-based solid electrolyte has a particle diameter (D50) of 0.1 $\mu$m to 1.5 $\mu$m.

8. The positive electrode for an all-solid-state battery according to claim 1,
    wherein the positive electrode is in the form of a pellet comprising the positive electrode active material, the sulfide-based solid electrolyte, and the conductive material.

9. The positive electrode for an all-solid-state battery according to claim 1,

    wherein the positive electrode may comprise a positive electrode current collector; and a positive electrode active material layer formed on one side of the positive electrode current collector,
    wherein the positive electrode active material layer comprises the positive electrode active material, the sulfide-based solid electrolyte, the conductive material, and a binder.

10. The positive electrode for an all-solid-state battery according to claim 9,
    wherein the binder comprises at least one selected from the group consisting of polytetrafluoroethylene (PTFE), polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polypichlorohydrin, polyphosphazene, polyacrylonitrile, polystyrene, latex, acrylic resin, phenolic resin, epoxy resin, carboxymethylcellulose, hydroxypropyl cellulose, cellulose acetate, cellulose acetate butyrate, cellulose acetate propionate, cyanoethylcellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride)-hexafluoropropene.

11. The positive electrode for an all-solid-state battery according to claim 1,

wherein the conductive material comprises graphite, and the graphite is at least one selected from the group consisting of natural graphite and artificial graphite.

12. The positive electrode for an all-solid-state battery according to claim 1,
    wherein the positive electrode active material layer has a porosity of 5 vol% to 16 vol%.

13. The positive electrode for an all-solid-state battery according to claim 1,

    wherein the positive electrode active material is included in an amount of 55 to 90% by weight based on the total weight of the positive electrode active material layer,
    wherein the sulfide-based solid electrolyte is included in an amount of 10 to 50% by weight based on the total weight of the positive electrode active material layer,
    wherein the conductive material is included in an amount of 0.05 to 10% by weight based on the total weight of the positive electrode active material layer.

14. An all-solid-state battery comprising the positive electrode according to claim 1, a negative electrode, and a sulfide-based solid electrolyte layer interposed therebetween.

## INTERNATIONAL SEARCH REPORT

| International application No. |
| --- |
| **PCT/KR2024/011570** |

| | |
| --- | --- |
| **A.** | **CLASSIFICATION OF SUBJECT MATTER** |
| | **H01M 4/62**(2006.01)i; **H01M 4/13**(2010.01)i; **H01M 10/0562**(2010.01)i; **H01M 10/052**(2010.01)i; **H01M 4/02**(2006.01)i |

According to International Patent Classification (IPC) or to both national classification and IPC

| | |
| --- | --- |
| **B.** | **FIELDS SEARCHED** |

Minimum documentation searched (classification system followed by classification symbols)

H01M 4/62(2006.01); H01B 1/06(2006.01); H01M 2/14(2006.01); H01M 4/36(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 도전재(conductive agent), 황화물 고체 전해질(sulfide solid electrolyte), 양극 (cathode, positive electrode), 기공도(porosity), 에너지 밀도(energy density), 전고체 전지(all solid state battery)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| A | JP 2023-001470 A (NISSAN MOTOR CO., LTD.) 06 January 2023 (2023-01-06)<br>See paragraphs [0017], [0045], [0050], [0062] and [0093]. | 1-14 |
| A | JP 6942810 B2 (FUJIFILM CORP.) 29 September 2021 (2021-09-29)<br>See paragraphs [0015], [0035], [0048] and [0069]. | 1-14 |
| A | JP 2021-163582 A (MAXELL HOLDINGS LTD.) 11 October 2021 (2021-10-11)<br>See paragraph [0033]. | 1-14 |
| A | JP 2021-101430 A (TEIJIN LTD.) 08 July 2021 (2021-07-08)<br>See paragraphs [0068] and [0070]-[0072]. | 1-14 |
| A | JP 2011-165410 A (OHARA INC.) 25 August 2011 (2011-08-25)<br>See paragraphs [0082]-[0084]. | 1-14 |

☐ Further documents are listed in the continuation of Box C.    ☑ See patent family annex.

| | |
| --- | --- |
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| **11 November 2024** | **11 November 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/011570**

| Patent document cited in search report | | | Publication date (day/month/year) | Patent family member(s) | | | Publication date (day/month/year) |
|---|---|---|---|---|---|---|---|
| JP | 2023-001470 | A | 06 January 2023 | None | | | |
| JP | 6942810 | B2 | 29 September 2021 | CN | 111194492 | A | 22 May 2020 |
| | | | | CN | 111194492 | B | 14 November 2023 |
| | | | | EP | 3696886 | A1 | 19 August 2020 |
| | | | | US | 2020-0227751 | A1 | 16 July 2020 |
| | | | | WO | 2019-074074 | A1 | 18 April 2019 |
| JP | 2021-163582 | A | 11 October 2021 | JP | 7421985 | B2 | 25 January 2024 |
| JP | 2021-101430 | A | 08 July 2021 | CN | 114072936 | A | 18 February 2022 |
| | | | | CN | 114072936 | B | 05 July 2024 |
| | | | | EP | 3993109 | A1 | 04 May 2022 |
| | | | | JP | 6860751 | B1 | 21 April 2021 |
| | | | | KR | 10-2022-0028025 | A | 08 March 2022 |
| | | | | TW | 202115949 | A | 16 April 2021 |
| | | | | US | 2022-0359881 | A1 | 10 November 2022 |
| JP | 2011-165410 | A | 25 August 2011 | None | | | |

Form PCT/ISA/210 (patent family annex) (July 2022)

**REFERENCES CITED IN THE DESCRIPTION**

**Patent documents cited in the description**

- KR 1020230121061
- JP 2021144906 A